# EUROPEAN PATENT SPECIFICATION

(11) **EP 2 335 964 B1**
(45) Date of publication and mention of the grant of the patent: **27.09.2017**
(21) Application number: 10195525.0
(22) Date of filing: 16.12.2010
(51) Int. Cl.: B60W 10/06, B60W 10/11, B60W 30/18, B60W 30/14

(54) **Vehicle speed control method with alternation of active motion and passive motion**
Fahrzeuggeschwindigkeit Regelverfahren mit Wechsel zwischen aktiver und passiver Bewegung
Méthode de contrôle de la vitesse des véhicules avec une alternance de déplacement actif et déplacement passif

(30) Priority: 16.12.2009 IT BO20090802
(43) Date of publication of application: 22.06.2011
(73) Proprietor: Magneti Marelli S.p.A., Corbetta (MI) (IT)
(72) Inventor: Prodi, Giovanni, 40137 Bologna (IT); Angellotti, Serino, 40134 Bologna (IT); Nesci, Walter, 40037 Sasso Marconi (IT)
(74) Representative: Bergadano, Mirko

(56) References cited:
- WO-A1-2005/052343
- DE-A1-102004 017 115
- DE-B3-102005 045 891
- US-A- 4 062 419
- US-A- 4 078 631

## Description

### TECHNICAL FIELD

The present invention relates to a method of controlling the speed of a vehicle.

### PRIOR ART

Patent US4062419A1 describes a vehicle provided with a disconnection device which is arranged in series with a traditional clutch, and which comprises a free wheel, which mechanically disconnects the driving wheels of the driving shaft of the internal combustion heat engine when the rotation speed on the driving wheels side is higher than the rotation speed on driving shaft side; thereby, the driving wheels may freely rotate witout bringing the driving shaft of the heat engine into rotation when the heat engine itself is stopped without needing to keep the clutch open. In order to optimize the heat engine use and therefore reduce fuel consumption when the vehicle is traveling along a flat, straight road, an "ON/OFF" mode may be used, which provides for cyclically alternating a period of active motion, in which the heat engine is on (being started by a traditional-type, electric starter motor) and transmits the motion to the driving wheels to gradually increase the forward speed, and a passive motion period, in which the heat engine is off and disconnected from the driving wheels and thus the vehicle advances by inertia (obviously at a gradually decreasing forward speed).

As described in patent US4062419A1, the "ON/OFF" mode which provides for cyclically alternating the phases of active motion and passive motion should be directly managed by the driver who presses the accelerator pedal during the phases of active motion and releases the accelerator during the phases of passive motion. However, the direct control by the driver causes various problems because, on one hand, the driver is obliged to follow a very complex law of motion (which is therefore a demanding burden for the driver) and, on the other hand, does not allow to obtain the maximum efficacy in consumption optimization. Furthermore, as described in patent US4062419A1, the vehicle should be provided with the disconnection device comprising a free wheel (normally not present in currently marketed vehicles) and should be provided with a boosted electric starter motor and battery, in order to deal with a high number of start-ups of the heat engine.

Patent application DE102004017115A1 and patent US4078631A1 describe a method of controlling the speed of a vehicle provided with a heat engine connected to driving wheels by means of a transmission; the control method includes the possibility of piloting the heat engine and the vehicle transmission to cyclically alternate a period of active motion, in which the engine is on and transmits a positive torque to the driving wheels to increase the speed of the vehicle from the minimum speed to the maximum speed, and a period of passive motion, in which the engine is off and disconnected from the driving wheels and thus the vehicle advances by inertia at a decreasing speed from the maximum speed to the minimum speed.

### DESCRIPTION OF THE INVENTION

It is the object of the present invention to provide a method of controlling the speed of a vehicle, which is free from the above-described drawbacks while being easy and cost-effective to be implemented, even in an existing vehicle.

According to the present invention, a vehicle speed control method is provided as claimed in the appended claims.

### BRIEF DESCRIPTION OF THE DRAWINGS

The present invention will now be described with reference to the accompanying drawings, which illustrate a non-limitative embodiment thereof, in which:
- figure 1 is a diagrammatic view of a vehicle which implements the speed control method of the present invention;
- figure 2 is a graph illustrating the correlation between speed and unitary consumption of the vehicle in figure 1; and
- figure 3 is a graph which shows the instantaneous speed profile and the average speed profile of the vehicle in figure 1 along a trial road.

### PREFERRED EMBODIMENTS OF THE INVENTION

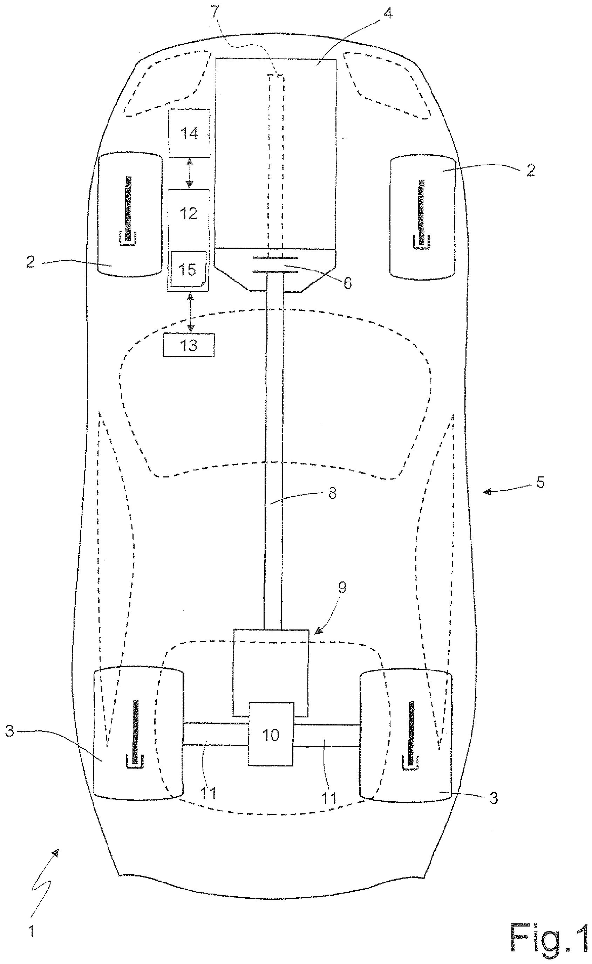

In figure 1, numeral 1 indicates as a whole a vehicle provided with two front wheel and two rear driving wheels 3 which receive the torque generated by an internal combustion heat engine 4 arranged in front position by means of a servo-assisted transmission 5. The servo-assisted transmission 5 comprises a servo-assisted clutch 6, which is accommodated in a bell integral with the engine 4 and is adapted to connect a driving shaft 7 of engine 4 to a transmission shaft 8 ending in a servo-assisted mechanical gearbox 9. A differential 10, from which a pair of drive axles 11 depart, each of which being integral with a corresponding rear driving wheel 2, is arranged in cascade to the servo-assisted gearbox 9.

Vehicle 1 comprises a control unit 12, which is able to control the speed of vehicle 1 both by operating on the generation of the torque by piloting the engine 4 and by operating on the transmission of the torque by operating on the servo-assisted transmission 5. An interface device 13, which allows the driver to dialogue with the control unit 12, is arranged in the passenger compartment of vehicle 1; in particular, by means of the interface device 13, the driver can communicate a desired cruise speed V_{C} to the control unit 12, which cruise speed is to be maintained by vehicle 1. Alternatively, the cruise speed V_{C} which should be maintained by vehicle 1 instead of being set by the driver could be determined by the control unit 12, as described in patent application IT2009TO00070, for example.

The control unit 12 is connected to a satellite navigator 14 (which may be either integrated in the control unit 12 or separate from the control unit 12), which is adapted both to determine (or at least foresee) the road which may be traveled by vehicle 1 and to determine the current speed and position of vehicle 1 along the road itself. For each road section, the satellite navigator 14 is able to provide the maximum possible speed and the minimum recommended speed for the road section itself (traveling too slow is equally dangerous); normally, on a straight road, the maximum possible speed corresponds to the speed limit imposed by the highway code, while at curves, bumps, junctions and other "difficult" points to be tackled with care, the maximum possible speed may be lower than the speed limit imposed by the highway code.

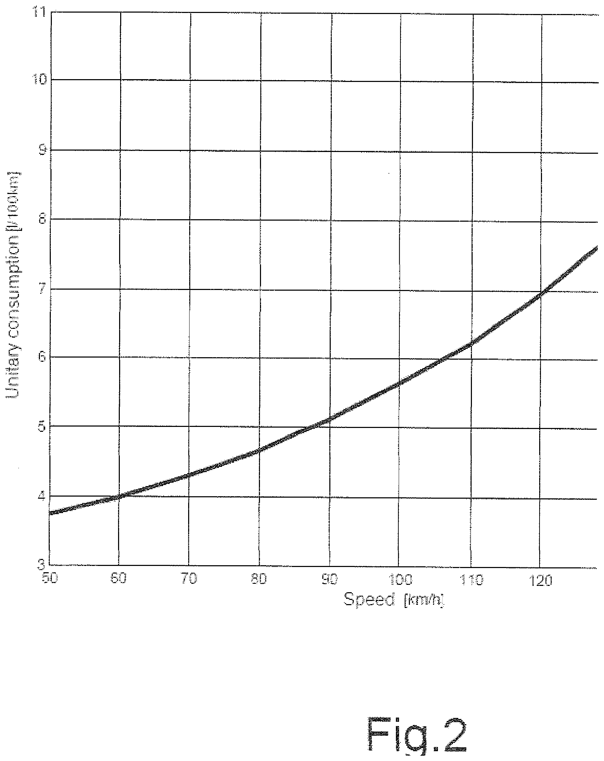

During a step of designing the control unit 12, the consumption of vehicle 1 is determined as the speed varies and therefore an experimental law is determined, which provides the consumption of vehicle 1 according to the speed; by way of example, the graph in figure 2 shows a real example of an experimental law which provides the consumption of vehicle 1 according to speed. In the definition of the law in figure 2, the ratio of the gearbox 9 is chosen to optimize the operation of engine 4, i.e. to make the engine 4 work under maximum efficiency conditions without compromising the good operation of the engine 4 itself (thus without taking the engine 4 to an excessively slow or an excessively fast rotation rate). In figure 2, the experimental law is shown, which provides the consumption of vehicle 1 according to speed in case of zero gradient; in general, the parameters of such an experimental law are defined in function of the gradient which may be either positive (uphill, therefore penalized consumptions), or negative (downhill, therefore favored consumptions).

Two types of motion are possible when vehicle 1 should maintain a constant cruise speed V_{C} (i.e. should travel along a road section at constant speed): a "traditional" motion mode, which includes maintaining the speed of vehicle 1 constant and equal to the desired cruise speed V_{C}, and an "ON/OFF" mode, which includes cyclically alternating the steps of active motion and passive motion, so that the average speed is actually equal to the desired cruise speed V_{C} although the instantaneous speed varies continuously.

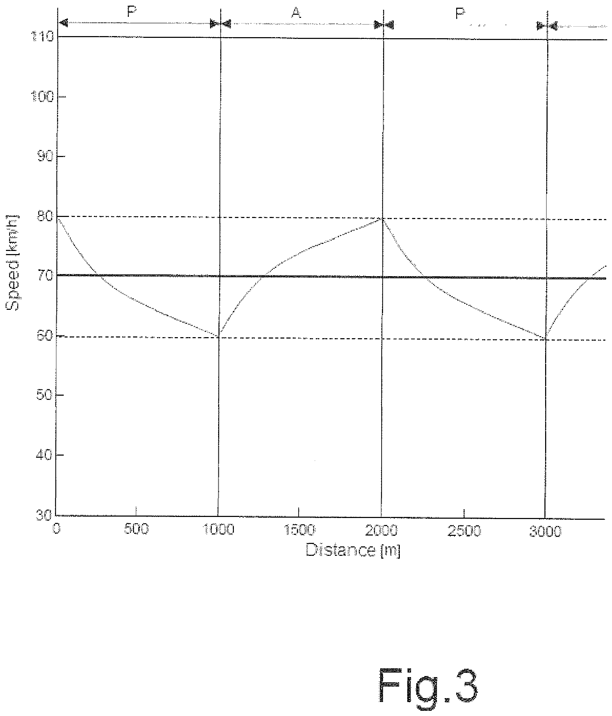

In other words, as shown in figure 3, the "ON/OFF" mode cyclically alternates a period of active motion (indicated by letter "A" in figure 3), in which engine 4 is on and connected to the rear driving wheels 3 by means of the gearbox 9, and a period of passive or inertia motion (indicated by letter "P" in figure 3), in which engine 4 is off and disconnected from the rear driving wheels 3 by putting the gearbox 9 in neutral. As shown in figure 3, during a period of active motion, the road vehicle 1 has an accelerated motion, in which the instantaneous speed V gradually increases to reach a maximum speed V_{MAX} higher than the desired cruise speed V_{C} (which is equal to the average speed), while during a period of passive motion, the road vehicle 1 has a decelerated motion, in which the instantaneous speed gradually decreases to reach a minimum cruise speed V_{MIN} lower than the desired cruise speed V_{C} (which is equal to the average speed). Therefore, the instantaneous speed V cyclically oscillates about the desired cruise speed V_{C} (which is equal to the average speed) while remaining within a range delimited by the minimum speed V_{MIN}, at the bottom, and by the speed V_{MAX}, at the top.

According to the features of vehicle 1 and of the desired cruise speed V_{C}, traveling at constant speed may be less convenient from the energy point of view (i.e. may imply higher consumptions) than traveling at variable speed which cylindrically alternates phases of active and passive motion, because in the phases of active motion engine 4 may be run under maximum efficiency conditions.

During a step of designing vehicle 1, a table 15 of motion which is stored in a memory of the control unit 12 is determined. According to the cruise speed V_{C}, the table 15 of motion determines whether it is more convenient to proceed at constant speed or to proceed at a variable speed by cyclically alternating a period of active motion and a period of passive motion. In other words, for a given cruise speed V_{C}, the table 15 of motion determines whether, to maintain (in average) such a cruise V_{C}, it is more convenient to proceed at constant speed or at variable speed. Moreover, when for a given cruise speed V_{C}, it is more convenient to proceed at variable speed, the table 15 of motion also provides the minimum speed V_{MIN}, the maximum speed V_{MAX} and an optimal acceleration A_{BEST} corresponding to the cruise speed VC. It is worth noting that the choice of the optimal acceleration A_{BEST} is carried out by attempting to take the heat engine 4 to operate at maximum possible efficiency, without being excessive and without deteriorating the driving comfort of vehicle 1.

According to a possible embodiment, table 15 of motion may be determined, in addition to as a function of the cruise speed V_{C}, even according to the road gradient; that is, for a given cruise speed V_{C} and for a given road gradient, the table 15 of motion says whether, in order to maintain (averagely) such a cruise speed V_{C}, it is more convenient to proceed at constant speed or at variable speed. The information of the road gradient may come from the satellite navigator 14, and in the latter case also relates to the road sections that vehicle 1 should still travel, or may be estimated by means of an algorithm inside the control unit 12, and in this case relates only to the road section on which vehicle 1 is traveling instant-by-instant.

It is worth noting that the convenience of a variable speed motion as compared to a motion at constant speed depends on the energy saving which is evaluated as a whole; that is, a variable speed motion is actually more convenient than a constant speed motion not only if it allows a given energy saving, but also if such a saving is significant (i.e. is higher than a minimum threshold which may be expressed as an absolute or relative value, for example).

In use, the control unit 12 determines a desired cruise speed V_{C} of vehicle 1 (e.g. receiving a corresponding control from the driver by means of the interface device 13). Once the control unit 12 has determined the desired cruise speed V_{C} of vehicle 1, the control unit 12 checks, by using the table 15 of motion, whether at the desired cruise speed V_{C} it is more convenient to proceed at constant speed or to proceed at variable speed.

If, according to table 15 of motion, it is more convenient to proceed at constant speed given the desired cruise speed V_{C}, then the control unit 12 pilots the heat engine 4 and the transmission 5 to advance the vehicle 1 at a constant speed equal to the desired cruise speed V_{C}. Alternatively, if according to the table 15 of motion, it is more convenient to proceed at a variable speed given the desired cruise speed V_{C}, then the control unit 12 pilots the heat engine 4 and the transmission 5 to cyclically alternate a period of active motion, in which engine 4 is on and transmits a positive torque to the rear driving wheels 3 to increase the speed of vehicle 1 from the minimum speed V_{MIN} to the maximum speed V_{MAX} at the optimal acceleration A_{BEST}, and a period of passive motion, in which engine 4 is off and disconnected from the rear driving wheels 3 and, therefore, vehicle 1 advances by inertia at a decreasing speed from the maximum speed V_{MAX} to the minimum speed V_{MIN}.

When passing from a period of passive motion to a subsequent period of active motion (i.e. when vehicle 1 advances at a speed close to the minimum speed V_{MIN}), the control unit 12 starts the heat engine 4 by inertia by gradually closing the clutch 6 of transmission 5, with the heat engine 4 being still off, so as to connect the engine 4 to the rear driving wheels 3, and thus bring the heat engine 4 into rotation by taking advantage of the kinetic energy of vehicle 1. Starting the heat engine 4 by inertia allows to maximize energy efficiency, because the mechanical energy of vehicle 1 is directly used without needing to convert part of the mechanical energy of vehicle 1 into electricity which, once has been supplied to a starter motor, is converted back into mechanical energy (it is clear that this double conversion has a non unitary efficiency). Furthermore, starting the heat engine 4 by inertia allows not to overload the starter motor with a high number of start-ups to be repeated frequently (in some cases even every 15-20 seconds).

Preferably, to start the heat engine 4, the control unit 12 partially closes clutch 6 (i.e. it arranges clutch 6 in an intermediate position between the complete opening and the complete closing) to transmit a predetermined, constant starting torque through clutch 6; thereby, on one hand, the heat engine 4 is started quite quickly and, on the other hand, the mechanical oscillations which may be generated when starting the heat engine 4 are not transmitted to the rear driving wheels 3 (thus to vehicle 1) because they are filtered by clutch 6 in a semi-open (or, from another point of view, semi-closed) position.

The predetermined starting torque transmitted by clutch 6 during the start-up should be sufficient to bring the heat engine 4 into rotation, but should not be too high to avoid vehicle 1 from excessively slowing down, thus compromising driving comfort. The predetermined starting torque is reached in a relatively "slow" manner with a maximum gradient (i.e. with a rate of growth in the unit of time), which depends on the engaged gear, in order to reach the best balance between operation speed and driving comfort (in general, the shorter the transients, the higher the overall efficiency, but if the predetermined starting torque is reached too quickly, the driving comfort may be excessively penalized, especially at low gears).

In order to start the heat engine 4 and before partially closing clutch 6, the control unit 12 engages the top gear in transmission 5, which at the minimum speed V_{MIN} of vehicle 1 imparts, to the heat engine 4, a rotation rate not lower than a minimum starting rate (equal to a minimum rotation rate under which the operation of the heat engine 4 becomes irregular plus a safety margin); thereby, the heat engine 4 draws the minimum possible torque at the rear driving wheels 3 for being started (indeed, the torque transmitted by clutch 6 to start the heat engine 4 being equal, the longer the ratio of transmission 5, the smaller the braking action exerted on vehicle 1).

After starting the heat engine 4 (i.e. when the heat engine 4 is self-sustaining), the control unit 12 completely opens clutch 6, thus engages an optimal gear in transmission 5 for the following period of active motion (which starts with vehicle 1 advancing at about the minimum speed V_{MIN}) and finally completely closes clutch 6 to start the period of active motion. Also in this case, the variation speed of the torque delivered by the heat engine 4 is a balance between the operation speed (which would lead to better efficiency) and the driving comfort (which is penalized by too high transients).

At the end of a period of active motion (i.e. when vehicle 1 advances at a speed close to the maximum speed V_{MAX}), the control unit 12 gradually decreases up to cancel out the torque delivered by the heat engine 4, thus opens clutch 6 when the torque delivered by the heat engine 4 is lower than a predetermined threshold value, and finally stops the heat engine 4 immediately after opening clutch 6. Typically, the predetermined threshold value which determines the opening of clutch 6 is equal to the self-sustaining torque of the heat engine 4; that is, the heat engine 4 is separated from the rear driving wheels 3 when the heat engine 4 stops supplying torque to the rear driving wheels 3 and starts drawing resistive torque from the rear driving wheels 3. Also in this case, the variation speed of the torque delivered by the heat engine 4 is a balance between the operation speed (which would lead to better efficiency) and the driving comfort (which is penalized by too high transients).

According to a possible embodiment, the interface device 13 allows the driver to dialogue with the control unit 12 to read and modify the current value of a saving coefficient k, which may vary within a given range and indicates by how much the driving comfort should prevail on the energy saving during the constant speed phases. In other words, according to the current value of the saving coefficient k, the control unit 12 decides whether to privilege the driving comfort or the energy saving.

As a function of the current value of the saving coefficient k, the minimum speed V_{MIN} and the maximum speed V_{MAX} may be varied so that the width of the range between the minimum speed V_{MIN} and maximum speed V_{MAX} is increased when it is needed to privilege the driving comfort, and is diminished when it is needed to privilege the energy saving. In other words, to maximize the energy saving, it is normally required to maintain the actual speed of vehicle 1 close to the cruise speed V_{C} and thus frequently changing between periods of passive motion and periods of active motion is required; however, frequently changing between periods of passive motion and periods of active motion may generate higher mechanical oscillations on vehicle 1 and thus may reduce the overall driving comfort.

Furthermore, the optimal acceleration A_{BEST} may also be varied in function of the current value of the saving coefficient k; in order to maximize the energy saving, it is normally required to use a relatively high optimal acceleration A_{BEST} (especially when the cruise speed V_{C} is low) which may however generate more mechanical oscillations on vehicle 1 and therefore may reduce the overall driving comfort.

The variation of minimum speed V_{MIN}, maximum speed V_{MAX}, and optimal acceleration A_{BEST} in function of the current value of the saving coefficient k may be obtained by apply corrective coefficients depending on the current value of the saving coefficient k to the minimum speed V_{MIN}, the maximum speed V_{MAX}, and the optimal acceleration A_{BEST} provided by the table 15 of motion, or may be obtained by directly modifying the table 15 of motion, the parameters of which are here defined according to the current value of the saving coefficient k.

Generally, when the maximum efficiency is required, the optimal acceleration A_{BEST} is only set to obtain the maximum efficiency steate of the heat engine 4 (which thus delivers the maximum efficiency torque for the conditions of vehicle 1).

According to a possible embodiment, the minimum speed V_{MIN} and the maximum speed V_{MAX} provided by the table 15 of motion for the desired cruise speed V_{C} are compared and if necessary modified with the information provided by the satellite navigator 14 and, in particular, with the maximum possible speed and the minimum recommended speed for the road section where vehicle 1 is located. In other words, in order to ensure a safe driving, the minimum speed V_{MIN} may not be lower than the minimum recommended speed for the road section where vehicle 1 is located (traveling too slow is potentially dangerous) and the maximum speed V_{MAX} may not be higher than the maximum possible speed for the road section where vehicle 1 is located (obviously the rules established by the highway code should be respected).

It is worth noting that the highway code sets a tolerance with which the respect of the maximum speed may be ckecked, thus the algorithm may be set so that the maximum speed V_{MAX} does not exceed the maximum possible speed over the travelled section, to which a settable tolerance may be added also in function of the desired cruise speed V_{C} of vehicle 1; thereby, in some instants, vehicle 1 could exceed the maximum speed allowed by the highway code, but would maintain however a slower average speed.

When the minimum speed V_{MIN} and/or the maximum speed V_{MAX} provided by table 15 of motion are modified by taking into account the limits set by the maximum possible speed and the minimum recommended speed of the road section in which vehicle 1 is located, the control unit 12 should determine whether it is always possible and convenient to proceed with a variable speed motion and, if so, determine new minimum speed V_{MIN} and maximum speed V_{MAX} values to ensure that the average speed is equal to the desired cruise speed V_{C}.

It is worth noting that in function of the current value of the saving coefficient k for the same cruise speed V_{C}, the table 15 of motion may determine whether the motion at constant speed is more convenient (when the current speed of the saving coefficient k privileges the driving comfort) or may determine that the variable speed motion is more convenient (when the current value of the saving coefficient k privileges the energy saving).

The above-described speed control method has many advantages, because it allows to decrease fuel consumptions and pollutant production without penalizing the traveling time.

Furthermore, the above-described speed control method is carried out with no intervention by the driver who only needs to set the required cruise speed V_{C}.

The functionality of the above-described speed control method may be easily regulated by the driver in simple, user-friendly manner by operating on the saving coefficient k.

Finally, the above-described speed control method is simple and cost-effective to be implemented, even in an existing vehicle of modern conception, because it does not require the installation of additional physical components in addition to those normally present.

## Claims

1. A method of controlling the speed of a vehicle (1) provided with an internal combustion engine (4) connected to driving wheels (3) through a transmission (5); the control method comprises the steps of:
determining, during a design stage, a table (15) of motion that provides, as a function of cruise speed (V_{C}), whether it is more convenient to proceed at a constant speed or to proceed at a variable speed cyclically alternating a period of active motion and a period of passive motion, and if motion at variable speed is more convenient the table (15) provides a minimum speed (V_{MIN}), a maximum speed (V_{MAX}) and an optimal acceleration (A_{BEST}) associated to the cruise speed (V_{C});
storing, during the design stage, the table (15) of motion in a control unit (12);
determining a desired cruise speed (V_{C}) of the vehicle (1);
automatically determining, by means of the control unit (12) and by using the table (15) of motion, whether at the desired cruise speed (V_{C}) it is more convenient to proceed at a constant speed or to proceed at a variable speed;
piloting, by means of the control unit (12) and if according to the table (15) of motion it is more convenient to proceed at a constant speed, the internal combustion engine (4) and the transmission (5) of the vehicle (1) in order to advance the vehicle (1) at a constant speed equal to the desired cruise speed (V_{C}); or
piloting, by means of the control unit (12) and if according to the table (15) of motion it is more convenient to proceed at a variable speed, the internal combustion engine (4) and the transmission (5) of the vehicle (1) in order to cyclically alternate a period of active motion, in which the internal combustion engine (4) is turned on and transmits to the driving wheels (3) a positive torque to increase the speed of the vehicle (1) from the minimum speed (V_{MIN}) to the maximum speed (V_{MAX}) at the optimal acceleration (A_{BEST}), and a period of passive motion, in which the internal combustion engine (4) is stopped and disconnected from the driving wheels (3) and therefore the vehicle (1) moves forward by inertia at a decreasing speed from the maximum speed (V_{MAX}) to the minimum speed (V_{MIN}).

2. A control method according to claim 1 and comprising the further step of starting by inertia, during the transition from a period of passive motion to a subsequent period of active motion, the internal combustion engine (4) by gradually closing, with the internal combustion engine (4) still off, a clutch (6) of the transmission (5) to connect the internal combustion engine (4) to the driving wheels (3) and therefore bring the internal combustion engine (4) into rotation using the kinetic energy of the vehicle (1).

3. A control method according to claim 2 and comprising the further step of partially closing, to start the internal combustion engine (4), the clutch (6) to transmit through the clutch (6) a predetermined starting torque.

4. A control method according to claim 3 and comprising the further step of determining the speed of closure of the clutch (6) as a function of the gear engaged in a gearbox (9) of the transmission (5).

5. A control method according to claim 3 or 4 and comprising the further steps of:
fully opening the clutch (6) after starting the internal combustion engine (4);
engaging in the transmission (5) an optimal gear for the following period of active motion; and
completely closing the clutch (6) to begin the period of active motion.

6. A control method according to one of the claims from 2 to 5 and comprising the further step of engaging, to start the internal combustion engine (4) and before partially closing the clutch (6), in the transmission (5) the top gear that at the minimum speed (V_{MIN}) of the vehicle (1) imparts to the internal combustion engine (4) a revolution rate not lower than a minimum starting rate.

7. A control method according to one of the claims from 1 to 6 and comprising, at the end of a period of active motion, the further steps of:
gradually decreasing, until canceling out, the torque delivered by the internal combustion engine (4);
opening the clutch (6) when the torque delivered by the internal combustion engine (4) becomes less than a predetermined threshold value; and
stopping the internal combustion engine (4) immediately after the opening of the clutch (6).

8. A control method according to claim 7, wherein the predetermined threshold value which determines the opening of the clutch (6) is equal to the self-sustaining torque of the internal combustion engine (4).

9. A control method according to one of the claims from 1 to 8 and comprising the further steps of:
determining at least one saving coefficient (k), which is variable and dependent on the desires of driver and indicates the primacy of energy saving compared to driving comfort; and
varying the minimum speed (V_{MIN}) and the maximum speed (V_{MAX}) as a function of the saving coefficient (k) so that the width of the interval between the minimum speed (V_{MIN}) and maximum speed (V_{MAX}) is increased when it is needed to privilege driving comfort and is diminished when it is needed to privilege energy saving.

10. A control method according to one of the claims from 1 to 9 and comprising the further steps of:
determining at least one saving coefficient (k), which is variable and dependent on the desires of driver and indicates the primacy of energy saving compared to driving comfort; and
varying the optimal acceleration (A_{BEST}) as a function of the saving coefficient (k).

11. A control method according to one of the claims from 1 to 9 and comprising the further steps of:
determining at least one saving coefficient (k), which is variable and dependent on the desires of driver and indicates the primacy of energy saving compared to driving comfort; and
varying the table (15) of motion as a function of the saving coefficient (k).

12. A control method according to one of the claims from 1 to 11 and comprising the further steps of:
determining, based on information from a navigation system (14), a maximum possible speed and/or a minimum recommended speed for the section of road where the vehicle (1) is located; and
modifying, if necessary, the minimum speed (V_{MIN}) and/or the maximum speed (V_{MAX}) so that the minimum speed (V_{MIN}) is not below the minimum recommended speed for the section of road where the vehicle (1) is located and/or the maximum speed (V_{MAX}) does not exceed the maximum speed possible for the section of road where the vehicle (1) is located.

13. A control method according to claim 12 and comprising the further step of recalculating, when the minimum speed (V_{MIN}) and/or the maximum speed (V_{MAX}) are changed according to the highest possible speed and/or the minimum recommended speed for the section of road where the vehicle (1) is located, the minimum speed (V_{MIN}) and the maximum speed (V_{MAX}) to ensure that the maximum average speed is equal to the cruise speed (V_{C}).

14. A control method according to one of the claims from 1 to 13 and comprising the further step of disconnecting, during a period of passive motion, the internal combustion engine (4) from the driving wheels (3) by putting to neutral a gearbox (9) of the transmission (5) and closing a clutch (6) of the transmission (5) of the vehicle (1).

## Patentansprüche

1. Verfahren zur Regelung der Geschwindigkeit eines Fahrzeugs (1), das mit einer Brennkraftmaschine (4) versehen ist, die über einen Antrieb (5) mit Antriebsrädern (3) verbunden ist, wobei das Verfahren folgende Schritte umfasst:
- während einer Bestimmungsphase, Bestimmen einer Bewegungstabelle (15), die in Abhängigkeit von der Fahrgeschwindigkeit (Vc) ermittelt, ob es zweckmäßiger ist, mit einer konstanten Geschwindigkeit oder mit einer variablen Geschwindigkeit weiterzufahren, bei der sich ein Zeitraum aktiver Bewegung und ein Zeitraum passiver Bewegung zyklisch abwechseln, und wenn es zweckmäßiger ist, mit einer variablen Geschwindigkeit weiterzufahren, ermittelt die Tabelle (15) eine Mindestgeschwindigkeit (V_{MIN}), eine Höchstgeschwindigkeit (V_{MAX}) und eine optimale Beschleunigung (A_{BEST}) entsprechend der Fahrgeschwindigkeit (Vc);
- während der Bestimmungsphase, Speichern der Bewegungstabelle (15) in einer Steuereinheit (12);
- Bestimmen einer gewünschten Fahrgeschwindigkeit (V_{C}) des Fahrzeugs (1);
- automatisches Bestimmen mittels der Steuereinheit (12) und der Bewegungstabelle (15), ob es bei der gewünschten Fahrgeschwindigkeit (V_{C}) zweckmäßiger ist, mit einer konstanten Geschwindigkeit oder mit einer variablen Geschwindigkeit weiterzufahren;
- sofern es nach der Bewegungstabelle (15) zweckmäßiger ist, mit einer konstanten Geschwindigkeit weiterzufahren, Steuern der Brennkraftmaschine (4) und des Antriebs (5) des Fahrzeugs (1) mittels der Steuereinheit (12), so dass das Fahrzeug (1) mit einer konstanten Geschwindigkeit angetrieben wird, die der gewünschten Geschwindigkeit (V_{C}) entspricht; oder
- sofern es nach der Bewegungstabelle (15) zweckmäßiger ist, mit einer variablen Geschwindigkeit weiterzufahren, Steuern der Brennkraftmaschine (4) und des Antriebs (5) des Fahrzeugs (1) mittels der Steuereinheit (12), so dass sich ein Zeitraum aktiver Bewegung, in dem die Brennkraftmaschine (4) eingeschaltet ist und ein positives Drehmoment an die Antriebsräder (3) übertragen wird, um die Geschwindigkeit des Fahrzeugs (1) mit optimaler Beschleunigung (A_{BEST}) von der Mindestgeschwindigkeit (V_{MIN}) auf die Höchstgeschwindigkeit (V_{MAX}) zu erhöhen, und ein Zeitraum passiver Bewegung, in dem die Brennkraftmaschine (4) gestoppt und von den Antriebsrädern (3) getrennt wird, so dass sich das Fahrzeug (1) durch Trägheit fortbewegt mit einer Geschwindigkeit, die von der Höchstgeschwindigkeit (V_{MAX}) bis zur Mindestgeschwindigkeit (V_{MIN}) abnimmt, zyklisch abwechseln.

2. Regelungsverfahren nach Anspruch 1, das einen weiteren Schritt umfasst, in dem die Brennkraftmaschine (4) während des Übergangs von einem Zeitraum der passiven Bewegung zu einem nachfolgenden Zeitraum der aktiven Bewegung mittels Trägheit gestartet wird, indem eine Kupplung (6) des Antriebs (5) bei ausgeschalteter Brennkraftmaschine (4) schrittweise geschlossen wird, um die Brennkraftmaschine (4) mit den Antriebsrädern (3) zu verbinden und somit die Brennkraftmaschine (4) durch die kinetische Energie des Fahrzeugs (1) in Drehung zu versetzen.

3. Regelungsverfahren nach Anspruch 2, das einen weiteren Schritt umfasst, in dem die Kupplung (6) zum Starten der Brennkraftmaschine (4) teilweise geschlossen wird, so dass mittels der Kupplung (6) ein vorgegebenes Anzugsdrehmoment übertragen wird.

4. Regelungsverfahren nach Anspruch 3, das einen weiteren Schritt umfasst, in dem die Schließgeschwindigkeit der Kupplung (6) in Abhängigkeit von dem in einem Getriebe (9) des Antriebs (5) eingelegten Gang bestimmt wird.

5. Regelungsverfahren nach Anspruch 3 oder 4, das folgende weitere Schritte umfasst:
- vollständiges Öffnen der Kupplung (6) nach dem Starten der Brennkraftmaschine (4);
- Einlegen eines optimalen Ganges in den Antrieb (5) für den nachfolgende Zeitraum der aktiven Bewegung; und
- vollständiges Schließen der Kupplung (6), so dass der Zeitraum der aktiven Bewegung beginnt.

6. Regelungsverfahren nach einem der Ansprüche 2 bis 5, das einen weiteren Schritt umfasst, in dem zum Starten der Brennkraftmaschine (4) vor dem teilweisen Schließen der Kupplung (6) in den Antrieb (5) der höchste Gang eingelegt wird, der bei der Mindestgeschwindigkeit (V_{MIN}) des Fahrzeugs (1) an die Brennkraftmaschine (4) eine Drehzahl überträgt, die nicht unter einer Mindeststartdrehzahl liegt.

7. Regelungsverfahren nach einem der Ansprüche 1 bis 6, das nach dem Ende eines Zeitraums der aktiven Bewegung folgende weitere Schritte umfasst:
- schrittweises Verringern des von der Brennkraftmaschine (4) gelieferten Drehmoments bis es aufgehoben ist;
- Öffnen der Kupplung (6), wenn das von der Brennkraftmaschine (4) gelieferte Drehmoment einen vorgegebenen Schwellenwert unterschreitet; und
- Stoppen der Brennkraftmaschine (4) unmittelbar nach dem Öffnen der Kupplung (6).

8. Regelungsverfahren nach Anspruch 7, wobei der vorgegebene Schwellenwert, der das Öffnen der Kupplung (6) bewirkt, gleich dem selbst-erhaltenden Drehmoment der Brennkraftmaschine (4) ist.

9. Regelungsverfahren nach einem der Ansprüche 1 bis 8, das folgende weitere Schritte umfasst:
- Bestimmen mindestens eines Einsparungskoeffizienten (k), der variabel und von den Wünschen des Fahrers abhängig ist und der das Primat der Energieeinsparung im Vergleich zum Fahrkomfort anzeigt; und
- Ändern der Mindestgeschwindigkeit (V_{MIN}) und der Höchstgeschwindigkeit (V_{MAX}) in Abhängigkeit von dem Einsparungskoeffizienten (k), so dass sich die Breite des Intervalls zwischen der Mindestgeschwindigkeit (V_{MIN}) und der Höchstgeschwindigkeit (V_{MAX}) vergrößert, wenn der Fahrkomfort Vorrang haben soll, und verkleinert, wenn die Energieeinsparung Vorrang haben soll.

10. Regelungsverfahren nach einem der Ansprüche 1 bis 9, das folgende weitere Schritte umfasst:
- Bestimmen mindestens eines Einsparungskoeffizienten (k), der variabel und von den Wünschen des Fahrers abhängig ist und der das Primat der Energieeinsparung im Vergleich zum Fahrkomfort anzeigt; und
- Ändern der optimalen Beschleunigung (A_{BEST}) in Abhängigkeit von dem Einsparungskoeffizienten (k).

11. Regelungsverfahren nach einem der Ansprüche 1 bis 9, das folgende weitere Schritte umfasst:
- Bestimmen mindestens eines Einsparungskoeffizienten (k), der variabel und von den Wünschen des Fahrers abhängig ist und der das Primat der Energieeinsparung im Vergleich zum Fahrkomfort anzeigt; und
- Ändern der Bewegungstabelle (15) in Abhängigkeit von dem Einsparungskoeffizienten (k).

12. Regelungsverfahren nach einem der Ansprüche 1 bis 11, das folgende weitere Schritte umfasst:
- Bestimmen einer möglichen Höchstgeschwindigkeit und/oder einer empfohlenen Mindestgeschwindigkeit für den Straßenabschnitt, auf dem sich das Fahrzeug (1) befindet, auf der Basis der Daten eines Navigationssystems (14); und
- falls nötig, Ändern der Mindestgeschwindigkeit (V_{MIN}) und/oder der Höchstgeschwindigkeit (V_{MAX}), so dass die Mindestgeschwindigkeit (V_{MIN}) nicht unter der empfohlenen Mindestgeschwindigkeit für den Straßenabschnitt liegt, auf dem sich das Fahrzeug (1) befindet, und/oder die Höchstgeschwindigkeit (V_{MAX}) nicht über der möglichen Höchstgeschwindigkeit für den Straßenabschnitt liegt, auf dem sich das Fahrzeug (1) befindet.

13. Regelungsverfahren nach Anspruch 12, das einen weiteren Schritt umfasst, in dem - wenn die Mindestgeschwindigkeit (V_{MIN}) und/oder die Höchstgeschwindigkeit (V_{MAX}) entsprechend der für den Straßenabschnitt, auf dem sich das Fahrzeug (1) befindet, höchstmöglichen Geschwindigkeit und/oder der empfohlenen Mindestgeschwindigkeit verändert werden - die Mindestgeschwindigkeit (V_{MIN}) und die Höchstgeschwindigkeit (V_{MAX}) neu berechnet werden, um sicherzustellen, dass die durchschnittliche Höchstgeschwindigkeit der Fahrgeschwindigkeit (V_{C}) entspricht.

14. Regelungsverfahren nach einem der Ansprüche 1 bis 13, das einen weiteren Schritt umfasst, in dem die Brennkraftmaschine (4) während eines Zeitraums passiver Bewegung von den Antriebsrädern (3) getrennt wird, indem ein Getriebe (9) des Antriebs (5) in Leerlaufstellung gebracht und die Kupplung (6) des Antriebs (5) des Fahrzeugs (1) geschlossen wird.

## Revendications

1. Procédé de contrôle de la vitesse d'un véhicule (1) muni d'un moteur à combustion interne (4) relié à des roues motrices (3) par le biais d'une transmission (5) ; le procédé de contrôle comprenant les étapes consistant à :
déterminer, pendant une étape de conception, une table (15) de déplacement qui indique, en fonction de la vitesse de croisière (V_{C}), s'il est plus pratique de passer à une vitesse constante ou de passer à une vitesse variable de manière cyclique en alternant une période de déplacement actif et une période de déplacement passif, et, si le déplacement à vitesse variable est plus pratique, la table (15) indique une vitesse minimale (V_{MIN}), une vitesse maximale (V_{MAX}) et une accélération optimale (A_{BEST}) associée à la vitesse de croisière (Vc) ;
stocker, pendant l'étape de conception, la table (15) de déplacement dans une unité de commande (12) ;
déterminer une vitesse de croisière souhaitée (V_{C}) du véhicule (1) ;
déterminer automatiquement, à l'aide de l'unité de commande (12) et à l'aide de la table (15) de déplacement, si, à la vitesse de croisière souhaitée (V_{C}), il est plus pratique de passer à une vitesse constante ou de passer à une vitesse variable ;
piloter, à l'aide de l'unité de commande (12) et si, selon la table (15) de déplacement, il est plus pratique de passer à une vitesse constante, le moteur à combustion interne (4) et la transmission (5) du véhicule (1) afin de faire avancer le véhicule (1) à une vitesse constante égale à la vitesse de croisière souhaitée (V_{C}) ; ou
piloter, à l'aide de l'unité de commande (12) et si, selon la table (15) de déplacement, il est plus pratique de passer à une vitesse variable, le moteur à combustion interne (4) et la transmission (5) du véhicule (1) afin d'alterner de manière cyclique une période de déplacement actif, pendant laquelle le moteur à combustion interne (4) est allumé et transmet aux roues motrices (3) un couple positif afin d'augmenter la vitesse du véhicule (1) en la faisant passer de la vitesse minimale (V_{MIN}) à la vitesse maximale (V_{MAX}) à l'accélération optimale (A_{BEST}), et une période de déplacement passif, pendant laquelle le moteur à combustion interne (4) est arrêté et déconnecté des roues motrices (3) et, par conséquent, le véhicule (1) se déplace en marche avant par inertie à une vitesse décroissante qui passe de la vitesse maximale (V_{MAX}) à la vitesse minimale (V_{MIN}).

2. Procédé de contrôle selon la revendication 1 et qui comprend l'étape supplémentaire consistant à démarrer par inertie, pendant le passage d'une période de déplacement passif à une période de déplacement actif, le moteur à combustion interne (4) en fermant progressivement, avec le moteur à combustion interne (4) toujours éteint, un embrayage (6) de la transmission (5) afin de relier le moteur à combustion interne (4) aux roues motrices (3) et, par conséquent, d'amener le moteur à combustion interne (4) en rotation à l'aide de l'énergie cinétique du véhicule (1).

3. Procédé de contrôle selon la revendication 2 et qui comprend l'étape supplémentaire consistant à fermer partiellement, afin de démarrer le moteur à combustion interne (4), l'embrayage (6) afin de transmettre, par le biais de l'embrayage (6), un couple de démarrage prédéterminé.

4. Procédé de contrôle selon la revendication 3 et qui comprend en outre l'étape supplémentaire consistant à déterminer la vitesse de fermeture de l'embrayage (6) en fonction de l'engrenage engagé dans une boîte de vitesses (9) de la transmission (5).

5. Procédé de contrôle selon la revendication 3 ou 4 et qui comprend les étapes supplémentaires consistant à :
ouvrir entièrement l'embrayage (6) après avoir démarré le moteur à combustion interne (4) ;
engager dans la transmission (5) un engrenage optimal pour la période de déplacement actif suivante ; et
fermer entièrement l'embrayage (6) afin de lancer la période de déplacement actif.

6. Procédé de contrôle selon l'une des revendications 2 à 5 et qui comprend l'étape supplémentaire consistant à engager, pour démarrer le moteur à combustion interne (4) et avant de fermer partiellement l'embrayage (6), dans la transmission (5), l'engrenage supérieur qui, à la vitesse minimale (V_{MIN}) du véhicule (1), transmet au moteur à combustion interne (4) une vitesse de rotation non inférieure à une vitesse de démarrage minimale.

7. Procédé de contrôle selon l'une des revendications 1 à 6 et qui comprend, à la fin d'une période de déplacement actif, les étapes supplémentaires consistant à :
réduire progressivement, jusqu'à l'annuler, le couple délivré par le moteur à combustion interne (4) ;
ouvrir l'embrayage (6) lorsque le couple délivré par le moteur à combustion interne (4) devient inférieur à une valeur de seuil prédéterminée ; et
arrêter le moteur à combustion interne (4) juste après l'ouverture de l'embrayage (6).

8. Procédé de contrôle selon la revendication 7, dans lequel la valeur de seuil prédéterminée qui détermine l'ouverture de l'embrayage (6) est égale au couple autonome du moteur à combustion interne (4).

9. Procédé de contrôle selon l'une des revendications 1 à 8 et qui comprend les étapes supplémentaires consistant à :
déterminer au moins un coefficient d'économie (k), qui est variable et qui dépend des souhaits du conducteur et qui indique la primauté de l'économie d'énergie sur le confort de conduite ; et
faire varier la vitesse minimale (V_{MIN}) et la vitesse maximale (V_{MAX}) en fonction du coefficient d'économie (k) de sorte que la largeur de l'intervalle entre la vitesse minimale (V_{MIN}) et la vitesse maximale (V_{MAX}) soit augmentée lorsqu'il est nécessaire de privilégier le confort de conduite, et soit diminuée lorsqu'il est nécessaire de privilégier l'économie d'énergie.

10. Procédé de contrôle selon l'une des revendications 1 à 9 et qui comprend les étapes supplémentaires consistant à :
déterminer au moins un coefficient d'énergie (k), qui est variable et qui dépend des souhaits du conducteur, et qui indique la primauté de l'économie d'énergie sur le confort de conduite ; et
faire varier l'accélération optimale (A_{BEST}) en fonction du coefficient d'énergie (k).

11. Procédé de contrôle selon l'une des revendications 1 à 9 et qui comprend les étapes supplémentaires consistant à :
déterminer au moins un coefficient d'énergie (k), qui est variable et qui dépend des souhaits du conducteur, et qui indique la primauté de l'économie d'énergie sur le confort de conduite ; et
faire varier la table (15) de déplacement en fonction du coefficient d'économie (k).

12. Procédé de contrôle selon l'une des revendications 1 à 11 et qui comprend les étapes supplémentaires consistant à :
déterminer, sur la base d'informations qui proviennent d'un système de navigation (14), une vitesse maximale possible et/ou une vitesse minimale recommandée pour la section de route sur laquelle le véhicule (1) se trouve ; et
modifier, si nécessaire, la vitesse minimale (V_{MIN}) et/ou la vitesse maximale (V_{MAX}) de sorte que la vitesse minimale (V_{MIN}) ne soit pas inférieure à la vitesse minimale recommandée pour la section de la route sur laquelle le véhicule (1) se trouve, et/ou que la vitesse maximale (V_{MAX}) ne dépasse pas la vitesse maximale possible pour la section de la route sur laquelle le véhicule (1) se trouve.

13. Procédé de contrôle selon la revendication 12 et qui comprend en outre l'étape supplémentaire de recalcul, lorsque la vitesse minimale (V_{MIN}) et/ou la vitesse maximale (V_{MAX}) est modifiée selon la vitesse la plus élevée possible et/ou la vitesse minimale recommandée pour la section de la route sur laquelle le véhicule (1) se trouve, la vitesse minimale (V_{MIN}) et la vitesse maximale (V_{MAX}) afin de garantir que la vitesse moyenne maximale est égale à la vitesse de croisière (Vc).

14. Procédé de contrôle selon l'une des revendications 1 à 13 et qui comprend l'étape supplémentaire consistant à déconnecter, pendant une période de déplacement passif, le moteur à combustion interne (4) des roues motrices (3) en plaçant en position neutre une boîte de vitesses (9) de la transmission (5) et en fermant un embrayage (6) de la transmission (5) du véhicule (1).
